(19) **Europäisches Patentamt**

**European Patent Office**

**Office européen des brevets**

(11) **EP 1 737 107 A2**

(12) **EUROPÄISCHE PATENTANMELDUNG**

(43) Veröffentlichungstag:
**27.12.2006 Patentblatt 2006/52**

(51) Int Cl.:
*H02K 21/16* (2006.01)    *H02K 29/03* (2006.01)

(21) Anmeldenummer: **06020521.8**

(22) Anmeldetag: **17.10.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **30.01.2003 DE 10303848**

(62) Dokumentnummer(n) der früheren Anmeldung(en) nach Art. 76 EPÜ:
**03757711.1 / 1 590 874**

(71) Anmelder: **Rexroth Indramat GmbH**
**97803 Lohr am Main (DE)**

(72) Erfinder: **Hahn, Ingo, Dr.**
**97816 Lohr am Main (DE)**

Bemerkungen:
Diese Anmeldung ist am 29 - 09 - 2006 als Teilanmeldung zu der unter INID-Kode 62 erwähnten Anmeldung eingereicht worden.

(54) **Drehstrommaschine mit optimierten Laufeigenschaften**

(57) Die Erfindung betrifft eine Drehstrommaschine, bestehend aus einem Primärteil mit N Nuten, m elektrischen Strängen und konzentrierter oder verteilter Wicklung, sowie einem Sekundärteil (10) mit magnetischen Polen (8, 9), und dient dazu, die im Betrieb auftretenden Störeffekte, wie Rastmoment und Oberwelligkeit der induzierten Spannung, bestmöglich durch eine geeignete, geometrisch bedingte, gruppenweise Anordnung der magnetischen Polpaare (P1-P12) und entsprechende Dimensionierung der Pollücken (6) und Polpaarlücken (5) abzudämpfen.

Figur 4

EP 1 737 107 A2

**Beschreibung**

Die Erfindung betrifft eine Drehstrommaschine nach dem Oberbegriff des unabhängigen Anspruches, die unter anderem in elektromechanischen Vorrichtungen als Antrieb oder zur Positionierung und Bearbeitung von Werkstücken verwendet wird. Die Laufeigenschaften derartiger Maschinen - wie zum Beispiel Laufruhe und konstantes Drehmoment - werden im Betrieb durch konstruktiv bedingte Störgrößen negativ beeinflusst.

Eine dieser Störgrößen wird als Rastmoment bezeichnet. Das Rastmoment beruht auf einem Reluktanzeffekt (Reluktanz = magnetischer Leitwert) und setzt sich aus einer Grundwelle sowie harmonischen Oberwellen zusammen. Die Periodizität der Grundwelle ist abhängig von der Geometrie der Maschine. Die Frequenzen der Oberwellen betragen ein ganzzahliges Vielfaches der Grundwelle. Das Rastmoment bewirkt in der Praxis eine Bewegungshemmung, insbesondere beim Start der Bewegung, wenn das Sekundärteil (bewegte Komponente) seine Position relativ gegenüber dem Primärteil (ortsfeste Komponente) verändert. Der am stärksten ausgeprägten Oberwelle, auch dominante Harmonische genannt, ist eine bestimmte Wellenlänge zugeordnet, die die Periodizität der Oberwelle bestimmt.

Eine weitere Störgröße stellt die in den Statorwicklungen induzierte Spannung dar. Die induzierte Spannung wird durch die Änderung der Flussverkettung hervorgerufen und zeigt aufgrund des nicht sinusförmigen Erregerfeldes in der Regel einen mehr oder weniger oberwellenbehafteten Signalverlauf. Die gemessene Oberwelligkeit der induzierten Spannung ist ein Maß für die später im Betrieb der Maschine auch unter Last vorhandene Welligkeit des Drehmomentes. Die Welligkeit beeinflusst mehr oder weniger die Präzision der ausgeführten Bewegung sowie die Lebensdauer der Maschine und kann prozentual über die Formel zur Berechnung des Klirrfaktors erfasst werden, indem der Oberwellenanteil zur Grundwelle ins Verhältnis gesetzt wird.

Zur Reduzierung des Rastmomentes wurden bereits verschiedenste Methoden entwickelt. Es ist z.B. bei mehrpoligen, rotationssymmetrischen und permanentmagnetisch erregten Maschinen möglich, diese Störgröße durch geschrägte Magnetisierung oder gestaffelte Rotormagnete sowie durch schräg angeordnete Statornuten zu reduzieren. Diese Verfahren erhöhen aber den Fertigungsaufwand, da zusätzliche Bearbeitungsschritte erforderlich werden, was die Produktionskosten steigert.

Ein weiterer Lösungsansatz zur Rastmomentreduzierung besteht darin, den Abstand zwischen den für das Erregerfeld verantwortlichen magnetischen Polen zu variieren. Die Idee ist ausführlich in den Veröffentlichungen Bianchi, N., Bolognani, S.: Reducing torque ripple in PM synchronous motors by pole shifting; In: Proc. ICEM 2000, pp. 1221 - 1226. Helsinki: Helsinki University of Technology, 2000 und W. Cai, D. Fulton, K. Reichert: Design of permanent magnet motors with low torque ripples: a review; In: Proc. ICEM 2000, pp. 1384 - 1385. Helsinki: Helsinki University of Technology 2000 beschrieben. Auch zu zusammengefasste Pole können bei geschickt gewählter Anordnung zueinander eine Reduzierung des Rastmomentes herbeiführen. Hiervon wird in der Offenlegungsschrift DE 41 33 723 A1 Gebrauch gemacht. Der in dieser Schrift gezeigte Drehfeldmotor besitzt einen achteckigen Rotor auf dessen Umfang Pole verteilt sind. Vier Pole bilden eine Einheit. Die Abstände der Pole untereinander sind ungleichmäßig. Insgesamt existieren zwei Einheiten mit je 4 Polen, deren Rastmomente sich phasenverschoben überlagern und damit das resultierende Rastmoment der Maschine verringern. Bei der aufgezeigten Lösung wird nur die Grundwelle des Rastmomentes betrachtet und nicht vollständig kompensiert. Oberwellen des Rastmomentes werden nicht betrachtet. Auch sei erwähnt, dass die im Beispiel gezeigte Ausführung des Rotors zu einem ungleichmäßigen Luftspalt führt und der Aufbau nicht umfangssymmetrisch ist. Es entsteht eine Unwucht, was bei der Drehung eine periodisch überlagerte Störkraft auf die Achslager bewirkt. Mit kleinen Gewichten oder Bohrungen muss diese Unwucht ausgeglichen werden, um Lagerschäden vorzubeugen.

Die in der Schrift DE 41 33 723 A1 gezeigte Anordnung wurde außerdem nicht in Bezug auf die in der Wicklung des Primärteiles erzeugte, induzierte Spannung untersucht. Insbesondere bei der Realisierung eines Generators ist aber eine möglichst sinusförmige Ausgangsspannung gewünscht. Je höher der Oberwellengehalt der Ausgangsspannung ist, desto höher ist die Abweichung von der reinen Sinusform. Bei einem Motor dagegen wäre ein möglichst oberwellenfreies Drehmoment gefordert. In den Veröffentlichungen von Jaime De La Ree und Nady Boules: Magnet Shaping To Reduce Induced Voltage Harmonics In PMMachines With Surface Mounted Magnets. In: IEEE Transactions on Energy Conversion, Vol. 6, No. 1, March 1991 oder Induced Voltage Harmonics Reduction of PM Cylindrical Machines. In: IEEE Transactions of Industrial Applications on Industry Applications, Vol. 28, No. 3, May/June 1992 werden Lösungsansätze zur Reduzierung der Oberwelligkeit diskutiert. Hier versucht man bei permanentmagneterregten Motoren das Problem durch Optimierung der Abmessungen und Form der Erregermagneten in den Griff zu bekommen. Es ist bekannt, dass der Signalverlauf der Leerlaufspannung durch die Form der Erregermagnete beeinflusst werden kann, zum Beispiel durch Verwendung von radial magnetisierten Schalenmagneten. Speziell beim Aufbau größerer Rotordurchmesser können aber aufgeklebte Schalenmagnete zur Reduzierung der induzierten Spannung nicht mehr verwendet werden, da diese zu hohen Wirbelstromverlusten beitragen. Größere Rotoren können auch mit preiswerteren, segmentierten Flachmagneten realisiert werden, um die Wirbelstromverluste zu begrenzen. Es treten dann aber wegen der veränderten Magnetform wieder verstärkt Oberwellenanteile der induzierten Spannung auf.

Auch über die Magnetbreite lassen sich Oberwellen beeinflussen und reduzieren. Diesen Lösungsansatz verfolgt die Anmeldung EP 1130747 A2, indem zwischen den beiden Seiten eines in den Stator eingebetteten Magneten und der Rotorachse ein Winkel definiert wird, dessen Größe man variiert, um den Feldverlauf zu beeinflussen. Hierdurch optimiert man unter anderem die induzierte Spannung und das Rastmoment. In der Praxis führt das allerdings zu geometrieabhängigen, aufwendigen Fertigungsprozeduren. Ziel ist es aber Standardmagnete zu verwenden, die in großen Stückzahlen eingekauft und für verschiedenste Maschinengeometrien eingesetzt werden können, unabhängig von den Abmessungen der Maschine.

In der Japanischen Schrift mit der Veröffentlichungsnummer 08251857 ist eine Polpaarverschiebung bei einer 8-poligen Maschine gezeigt, welche durch Überlagerungseffekte zu einer Reduzierung des Rastmomentes führt. Die induzierte Spannung als Störgröße wird hier nicht betrachtet.

Die Aufgabe der Erfindung besteht darin, eine Reduzierung höherer Harmonischer der induzierten Spannung zu bewirken. Der fertigungstechnische Aufwand und die daraus resultierenden Herstellungskosten sollen möglichst gering ausfallen.

Zusätzlich ist es Aufgabe der Erfindung eine Vorrichtung bereitzustellen, mit deren Hilfe bei der erfindungsgemäßen Herstellung einer permanentmagneterregten Drehstrommaschine die Pole realisiert werden können.

Bei elektrischen Maschinen, die zur Bearbeitung (u.a. Fräsen, Schleifen, Bohren) von Werkstücken dienen, soll die Erfindung die Präzision der zu bearbeitenden Teile erhöhen und damit die Fertigungstoleranzen verringern.

Diese Aufgabe wird mittels des Anspruchsgegenstandes des unabhängigen Anspruches dadurch gelöst, dass

a) die Pollücke (6) aller Polpaare im wesentlichen gleich ist und sich aus einer Gleichverteilung aller magnetischen Pole auf dem Sekundärteil ergibt;

b) unmittelbar aufeinanderfolgende Polpaare Gruppen bilden, wobei

b.1.1 die Anzahl der Polpaare innerhalb jeder Gruppe identisch ist,

b.1.2 eine Gruppe wenigstens zwei Polpaare enthält,

b.1.3 wenigstens zwei Gruppen existieren,

b.1.4 jedes vorhandene Polpaar einer Polpaargruppe zugehörig ist,

b.1.5 die Gruppen äquidistant entlang des Sekundärteiles verteilt sind,

b.1.6 alle Polpaare einer Gruppe um einen vorbestimmten, für alle Gruppen einheitlichen, Abstand und Richtungssinn gegenüber einer äquidistanten Verteilung aller vorhandenen Polpaare auf dem Sekundärteil zueinander relativ verschoben sind, so dass die Polpaarlücke (5) innerhalb jeder Gruppe im wesentlichen gleich ist.

Die Erfindung gemäß Anspruch 1 hat den Vorteil, dass

die höheren Harmonischen der induzierten Spannung eine Dämpfung erfahren und damit die Drehmomentwelligkeit reduziert wird;

ein zusätzlicher Vorteil ist, dass neben der geometrisch bedingten Auslöschung der Grundwelle des Rastmomentes durch einen neu geschaffenen Freiheitsgrad bezüglich der Anordnung und der Abstände der Polpaare zueinander eine zusätzliche Dämpfung höherer Harmonischer des Rastmomentes erreicht wird, was sich insgesamt positiv auch auf das vorhandene Rastmomentspektrum auswirkt;

ein weiterer Vorteil ist, dass einzelne Fertigungsschritte, wie das Schrägen der Nuten oder Staffeln von Magneten, komplett eingespart und somit Kosten gesenkt werden können;

nun eine universelle Methode zur Rastmomentreduzierung zur Verfügung steht, da eine Anwendung auf prinzipiell alle Maschinentypen möglich ist;

Neben diesen Vorteilen bietet die Erfindung noch weitere Vorteile, nämlich dass gezielt zumindest zwei Störeinflüsse gleichzeitig reduziert und optimiert werden, indem man Lücken zwischen Polen und Polpaaren errechnet, die zwar nicht zur kompletten Auslöschung der dominanten Harmonischen des Rastmoments führen, diese jedoch bestmöglich dämpfen;

aufgrund der umfangssymmetrischen Anordnung der Pole einer Unwucht vorgebeugt und dadurch aufwendige Wuchtprozeduren bei Fertigung eingespart werden können;

wegen der verbesserten Laufeigenschaften durch verringerte Radialkräfte einem vorzeitigen Verschleiß, z.B. der Rotorwellenlager vorgebeugt wird, weil das System durch den symmetrischen Aufbau statisch und dynamisch im Gleichgewicht ist.

Ein Prinzip der Erfindung liegt somit in der Anordnung der magnetischen Polpaare sowie der Dimensionierung der Pollücken und der Polpaarlücken, so dass sich sowohl für das Rastmoment als auch für die höheren Harmonischen der induzierten Spannung eine vorteilhafte Dämpfung ergibt. Das Prinzip ist auf jeden Maschinentyp anwendbar, also zum Beispiel auf Außen- und Innenläufer sowie auf Linearmotoren. Die magnetischen Pole können dabei sowohl auf dem Sekundärteil befestigt als auch integriert, also innenliegend, sein, so dass sich im letzteren Fall ein gleichmäßiger mechanischer Spalt zwischen Primär- und Sekundärteil ergibt. Je nach Geometrie der Maschine und Aufgabenstellung erreicht man den erfindungsgemäßen Effekt dadurch, dass die Lücken zwischen benachbarten, unterschiedlichen Polpaaren reduziert bzw. vergrößert werden. Im Falle eines rotationssymmetrischen Systems kann der Abstand anstatt über die Nutteilung auch über einen Winkelbetrag definiert sein. Der Winkel kennzeichnet dabei ein Kreissegment des Rotorumfangskreises, während der Abstand der Bogenlänge dieses Segments entspricht. Bei Linearmotoren wird der Abstand in der Regel durch eine Strecke zwischen den Polen definiert.

Die erfindungsgemäße Lösung ist nicht auf bestimmte Oberwellen des Rastmomentes oder der induzierten Spannung beschränkt. Die im Betrieb vorhandenen Oberwellen und deren Intensität hängen vielmehr von der Geometrie und Ausführung des Primär- und Sekundärteiles ab, insbesondere von dem Nut/Pol-Verhältnis der Maschine, der Nut- und Polteilung, der Spulenweite der Dreh- bzw. Wanderfeldwicklung, dem Spulenfaktor, der Realisierungsform der Pole (Höhe, Breite und Form bei Permanentmagneten), der Lochzahl, der Strangzahl, der Wicklungsmethode (konzentriert oder verteilt) und der Verschaltung der Wicklungen bzw. Spulengruppen untereinander (parallel, seriell oder Kombinationen daraus). Die erforderlichen Pollücken und Polpaarlücken sind daher für jede Maschine neu zu berechnen und auf die zu dämpfenden Oberwellen bzw. gewünschten Effekte abzustimmen. Die erforderliche Polbedeckung hängt von dem durch die Anwendung geforderten Drehmoment ab und kann sehr unterschiedlich ausfallen. Die praktisch realisierbaren Pol- und Polpaarlücken sind durch die benötigte Polbedeckung vorbestimmt und können im Rahmen der sich ergebenden Verschiebungsbandbreite für eine Optimierung bestmöglich ausgenutzt werden.

Eine rotationssymmetrische Drehstrommaschine nach Anspruch 1 kann so ausgebildet sein, dass bei einem Nut/Pol-Verhältnis von 3/2 (mit N=18 und P=12), Oberwellen der induzierten Spannung mit den Ordnungszahlen k= 5,7,11,etc. auftreten und durch die erfindungsgemäße Lösung gedämpft werden. In diesem Fall sind 3 Nuten einem Polpaar zugeordnet und es wird eine Spulenweite von $w = \dfrac{2\pi}{3}$ gewählt, die auch der Nutteilung entspricht. Die 12 Pole der 6 Polpaare weisen eine konstante Pollücke (etwa 3/2-fache Nutteilung) auf. Die konstruktionsbedingt vorhandene 18. Harmonische des Rastmomentes wird wegen der identischen Pollücken komplett ausgelöscht. Grund hierfür ist, dass der mechanische Abstand der Pole einem ganzzahligen Vielfachen der halben Nutteilung (elektrischen Winkel von n*PI, mit n=1,2,3,4,usw.) entspricht und sich dieser durch die Gleichverteilung aller Pole auf dem Sekundärteil automatisch ergibt. Die 36. Harmonische stellt sich deshalb abhängig von der Nutanzahl N=18 als dominante Harmonische des Rastmomentes ein. Die Hüllkurve der Amplituden der Harmonischen gehorcht einer 1/k-Gesetzmäßigkeit, wobei k die Ordnungszahl der betrachteten Harmonischen repräsentiert. Abweichende Geometrien haben abweichende Harmonische und Hüllkurven zur Folge. Die Polpaarlücken könnten nun auch zur bestmöglichen Dämpfung einzelner Störeinflüsse optimiert werden. Betrachtet man die Störeinflüsse isoliert, so sind wesentlich höhere Dämpfungswerte oder sogar eine komplette Auslöschung erreichbar. Die Erfindung gemäß Anspruch 1 bietet einen Kompromiss, der sowohl zu einer Rastmomentreduzierung als auch zu einer Reduzierung des Klirrfaktors der induzierten Klemmenspannung führt.

Der Anspruch 2 zeigt eine konkrete Ausführungsform der Erfindung anhand einer 3/2-Maschine mit 18 Nuten und 6 Polpaaren. Jedes andere Nut/Pol - Verhältnis wäre dabei ebenso denkbar, lediglich die Pollücken und Polpaarlücken müssen dann neu ermittelt werden. Der Vorteil dieser Anordnung liegt in der Realisierung der Wicklungen am Primärteil. Es können bei einer Strangzahl m=3 drei parallele Zweige und damit bis zu 3 verschiedene Drehzahlen realisiert werden. Je nach Wahl der Nut-, Pol-, Strangzahl und Verschaltung der Spulen untereinander (parallel, seriell oder Mischformen daraus) ließen sich weitere Drehzahlen realisieren.

Unter Beachtung der in Anspruch 3 dargestellten Maßnahmen erhält man ein stark oberwellenbereinigtes Drehmoment mit einer Reduzierung des Klirrfaktors der induzierten Spannung um etwa 68% sowie ein um zirka 33 % reduziertes Rastmoment.

Betrachtet man dagegen die in Anspruch 4 favorisierte Lösung, so führt die Polpaarverschiebung zu einer Reduzierung des Klirrfaktors der induzierten Spannung von etwa 67 % jedoch zusätzlich um eine Reduzierung des Rastmomentes um 61%. Durch eine Optimierungsrechnung kann die von der Maschinengeometrie abhängige Verschiebung ermittelt werden. Schon geringe Abweichungen von wenigen Hundertstel der Nutteilung können sich drastisch auf die erzielten Dämpfungswerte auswirken. Die folgende Tabelle zeigt beispielhaft den Zusammenhang zwischen dem Verschiebungswinkel und der erreichten Dämpfung.

**Tabelle1: Mögliche Ausführungsformen**

| Polpaarlücke in Grad | Verschaltung der Wicklungen | Klirrfaktor der induzierten Spannung | Spitze-Spitze-Wert des Rastmoments |
|---|---|---|---|
| 0° | max. 6 parallele Zweige | 13,1% | 9,7062 Nm/m |
| 6°<br>3/10 Nutteilung | max. 3 parallele Zweige, je 2 | 5,5 % | 6,4882 Nm/m |

(fortgesetzt)

| Polpaarlücke in Grad | Verschaltung der Wicklungen | Klirrfaktor der induzierten Spannung | Spitze-Spitze-Wert des Rastmoments |
|---|---|---|---|
| | Strangspulen benachbarter Polpaaren in Reihe | 5. Harmonische unterdrückt. | |
| 4,9° ~ ¼ Nutteilung | max. 3 parallele Zweige, je 2 Strangspulen benachbarter Polpaaren in Reihe | 4,52 % 5. und 7. Harmonische gleichgewichtet (ohne Berücksichtigung des Hüllkurvenverlaufes) | 3,8869 Nm/m |
| 5° ¼ Nutteilung | max. 3 parallele Zweige, je 2 Strangspulen benachbarter Polpaaren in Reihe | 4,36 % 5. und 7. Harmonische ordnungszahlgewichtet (mit Berücksichtigung des Hüllkurvenverlaufes) | 3,7718 Nm/m |

Die Unteransprüche 5 bis 7 zeigen eine weitere konkrete Ausführungsform der Erfindung. Es können hier bei 3 Strängen 2 verschiedene Drehzahlen realisiert werden, da nur zwei Polpaargruppen existieren. Unter Beachtung der speziell für diese Ausführungsformen berechneten Polpaarabstände stellen sich damit ebenfalls stark oberwellenbereinigte Drehmomente und reduzierte Rastmomente ein.
Relativ preiswert lässt sich die Maschine durch Verwendung von Permanentmagneten zur Erzeugung des Erregerfeldes herstellen. Diese Magnete können in großen Stückzahlen bezogen und über eine Bestückungsvorrichtung in einem automatisierten Prozess im Sinne der Erfindung mit dem Sekundärteil verbunden werden. Zur Realisierung der Erregerpole sind alle aus dem Stand der Technik bekannten Verfahren denkbar, zum Beispiel auch Erregerwicklungen. Die exakte Realisierung der errechneten Abstände gestaltet sich jedoch bei Verwendung von Permanentmagneten am unkompliziertesten.

Bei Verwendung von mehreren Einzelmagneten zur Herstellung eines Pols lassen sich Fertigungstoleranzen der Rohlinge kompensieren, so dass die Lücken zwischen Polen und Polpaaren exakter realisierbar sind. Auch die Erwärmung des Sekundärteiles durch Wirbelstromverluste verringert sich dadurch.

Verwendet man für die Erregerpole einer Synchronmaschine beispielsweise magnetisierte Ringe oder Röhren, so wird eine sehr hohe Präzision erreicht und die zu realisierenden Abstände im Sinne der Erfindung lassen sich im Gegensatz zu aufgeklebten Polen sehr exakt einhalten. Es sind hier alle aus dem Stand der Technik bekannten Formen der Magnetisierung denkbar, zum Beispiel parallel, diametral, multipolar und radial. Die Besonderheit bei dieser Ausführungsform liegt in der Realisierbarkeit sehr schmaler Pol- bzw. Polpaarlücken, was zum Beispiel bei hoher Polbedeckung erforderlich werden kann. Die Anforderung an die hohe Präzision ergibt sich aus der praktischen Anwendung, denn schon geringe Abweichungen führen, wie bereits erwähnt, zu einer verhältnismäßig großen Beeinflussung der Dämpfungseigenschaften.

Durch geschrägte Nuten lassen sich Oberwellen des Rastmomentes und der induzierten Spannung zusätzlich beeinflussen. Gleiches gilt für die gestaffelte oder geschrägte Montage der Permanentmagnete auf oder unterhalb der Oberfläche des Sekundärteiles entlang der Rotorachse (beispielsweise bei einem rotationssymmetrischen System), so dass die üblicherweise parallel zur Rotorachse ausgebildete Längsachse eines Pols nun um einen bestimmten Winkel gegenüber der Rotorachse geneigt ist.

Die Ausführung gemäß Anspruch 12 erfordert besondere Maßnahmen in Bezug auf die vorhandene Oberwelligkeit der induzierten Spannung im Gegensatz zu einer verteilten Anbringung der Wicklungen, wo Oberwellen über die Spulenweite und die Verschaltung der Spulen beeinflussbar sind. Diese Maßnahmen stehen jedoch bei Verwendung einer konzentrierten Wicklung nicht zur Verfügung, denn im Falle eines rotationssymmetrischen Stators ist um jeden einzelnen Statorzahn eine eigenständige Wicklung aufgebracht und wirkt abhängig von der Geometrie auf bestimmte Frequenzen wie eine Resonator. Das erfindungsgemäße Prinzip vermindert diese Oberwellen ganz gezielt und wirkt sich deshalb vorteilhaft auf die induzierte Spannung bei konzentrierter Wicklung aus.

Kommt die erfindungsgemäße Drehstrommaschine als Generator zum Einsatz, so liefert dieser eine der idealen Sinusform sehr ähnliche Leerlaufspannung.

Eine andere vorteilhafte Ausgestaltung der Erfindung ist die Verwendung als Motor, wenn eine hohe Anforderung an die Präzision der Drehbewegung gestellt wird. Beide erfindungsgemäße Maßnahmen, nämlich die Reduzierung des Rastmomentes und der Oberwellen der induzierten Spannung führen zu einem stabileren, oberwellenbereinigten Drehmoment.

Ein besonders wichtiges Kriterium von Maschinen im Werkzeug- und Formenbau ist die geforderte präzise Ausführung der Arbeitsgänge. Hierzu gehört zum Beispiel die Freiformflächenbearbeitung (Fräsen von Konturen, Drehen, Schleifen, Polieren, Lasern, Bohren) sowie ein exaktes Positionieren der Werkzeuge. Beispielsweise wird mit einem kugelförmigen Fräswerkzeug zeilenweise die fertige Kontur erzeugt. Der Abstand der Bahnen und die präzise Führung des Werkzeuges bestimmt maßgeblich die Oberflächenqualität und Güte des Werkstückes. Auch eine lange Lebensdauer der Maschinen ist erwünscht, was konsequenterweise den Wartungsaufwand verringert. Ein erfindungsgemäßer Motor erfüllt diese hohen Anforderungen bei vertretbarem Kosten/Nutzen-Verhältnis und begünstigt damit eine preiswerte Herstellung der bearbeitenden Maschine.

Die erforderlichen Vorrichtungen zur Herstellung einer solchen Maschine ergeben sich aus den Ausführungen in Anspruch 16 und 17. Anspruch 16 berücksichtigt den Fertigungsprozess der Magnetisierung, wobei die am Sekundärteil angebrachten Rohlinge unter Beachtung der geometrischen Anordnung nach der Montage magnetisiert werden können. Der Vorteil hierbei ist, dass der Montageprozess sich bei nicht magnetisierten Rohlingen wesentlich einfacher gestalten lässt als bei direkter Verwendung von Permanentmagneten. Der Montageprozess selbst wird durch Anspruch 17 berücksichtigt. Nachdem die geometrische Anordnung der Erreger festgelegt ist, kann dieser Prozess in der Großserienfertigung eingesetzt werden. Der Vorteil hierbei liegt in der Tatsache, dass bei Verwendung von Magneten als Erreger während des Aufklebens oder durch anderweitiges Aufbringen der Rohlinge am Sekundärteil bereits die ermittelten Pollücken (nicht magnetisierter Bereich zwischen zwei unterschiedlichen Polen eines Polpaares) und Polpaarlücken (nicht magnetisierter Bereich zwischen zwei Polpaaren) automatisch sehr genau eingehalten werden. Nach diesem Fertigungsschritt befinden sich die Erregerpole also bereits an der richtigen Position (z.B. auf einem Rotor) und es wird keine Nachbearbeitung erforderlich. Weitere vorteilhafte Ausgestaltungen der Erfindung lassen sich den zusätzlich aufgeführten Unteransprüchen entnehmen.

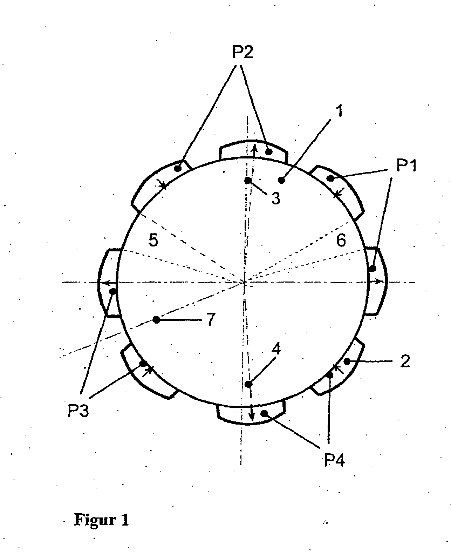

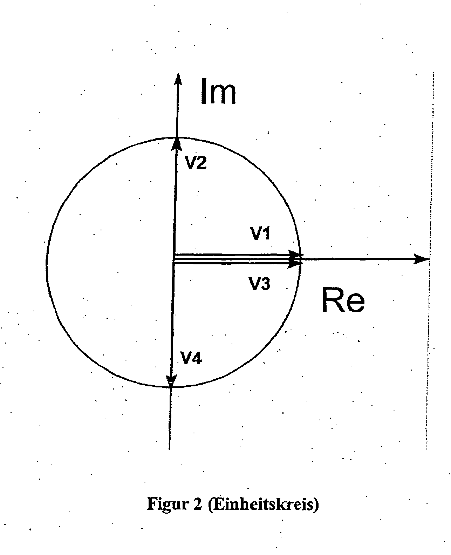

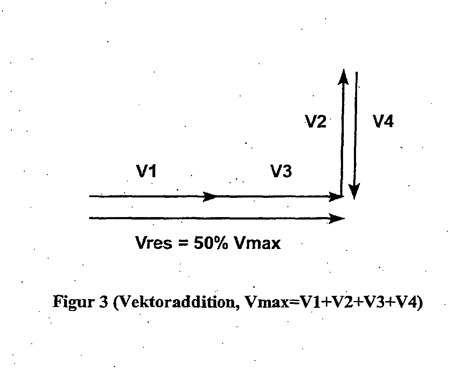

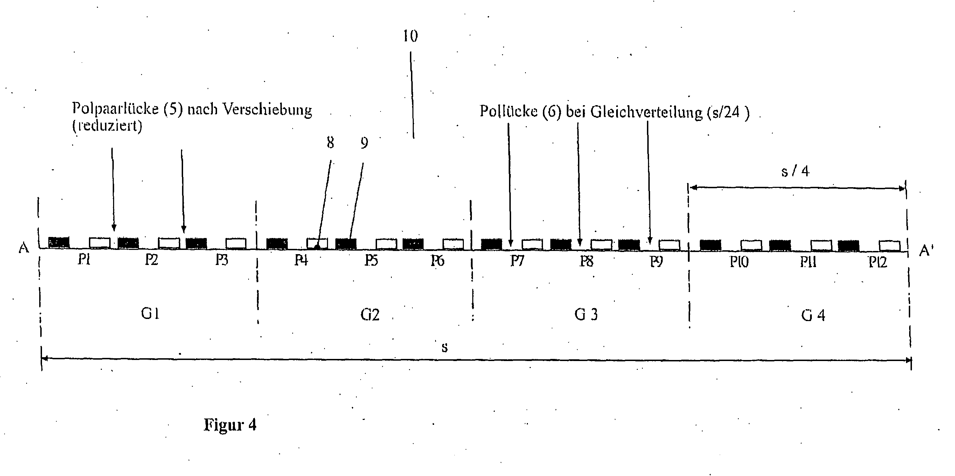

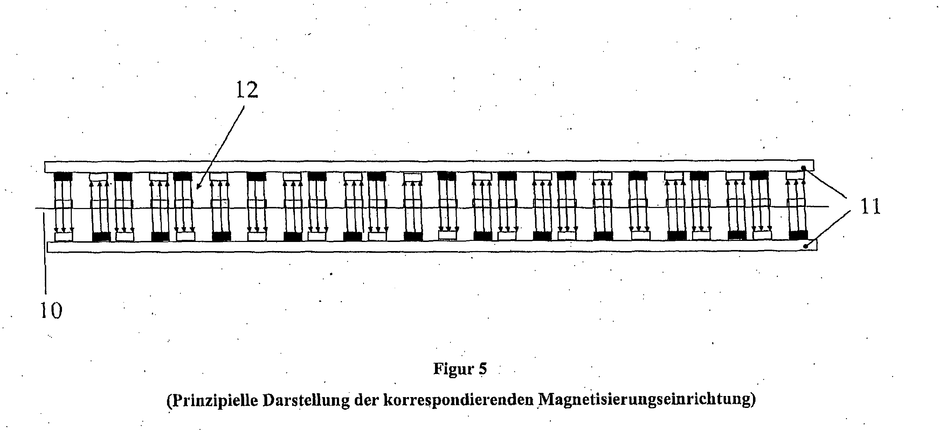

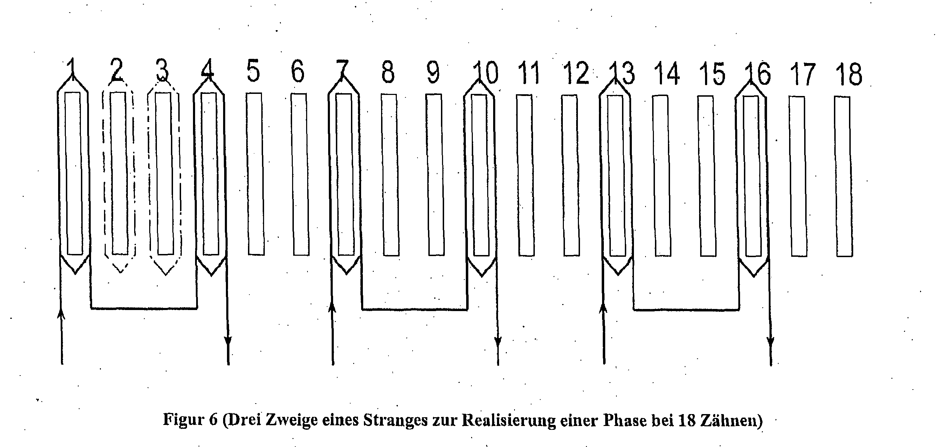

Alle Figuren 1 bis 6 sind schematische oder grob schematische Skizzen und dienen ausschließlich der Veranschaulichung der schriftlichen Erläuterungen. Figur 1 zeigt einen erfindungsgemäß ausgeführten Rotor im Querschnitt und Figur 2 die vektorielle Darstellung (V1-V4) der Komponenten, der 24. Harmonischen des Rastmomentes im Einheitskreis. Das zum Vektor (V1-V4) gehörige Polpaar ist mit (P1-P4) gekennzeichnet (siehe Figur 1). Figur 3 stellt die Superposition aller Vektoren dar. Figur 4 zeigt die Gruppeneinteilung der Polpaare. Figur 5 veranschaulicht grob die zum Sekundärteil aufgebaute korrespondierende Geometrie einer Magnetisierungseinrichtung. Figur 6 zeigt am Beispiel einer Maschine mit N=18 Nuten die Realisierung der verteilten Zahnwicklung bei einer Strangzahl von m=3 für einen Strang.

Figur 1 zeigt einen erfindungsgemäß hergestellten Rotor (1). Als Ausführungsbeispiel wird ein 3-phasiger rotationssymmetrischer Drehfeldmotor mit einem Verhältnis 3:2 (Anzahl der Nuten im Stator / Polzahl am Rotor) gewählt. Der Stator hat zwölf Nuten und der Rotor acht über den Umfang gleichmäßig verteilte Permanentmagnete ((2), 4 Süd- und 4 Nordpole) zur Erzeugung des Erregerfeldes. Selbstverständlich könnte das Erregerfeld auch über Erregerwicklungen erzeugt werden, die dann im Sinne der Erfindung am Rotor (1) zu platzieren wären. Die Ausführung des zum Betrieb unverzichtbaren Stators (hier nicht dargestellt) kann dem Stand der Technik entnommen werden. Die Wicklung des Stators wird als Polwicklung mit einer Strangzahl von beispielsweise m=3 ausgeführt. Die Lochzahl für diese Anordnung errechnet sich zu 12/ (2 x 4 x 3) = 0,5. Auf dem Rotor (1) sind Permanentmagnete (2) aufgebracht, die einen Nord- oder Südpol bilden. Zwei benachbarte Pole (2) unterschiedlicher Polarität bilden jeweils ein Polpaar (P1-P4). Der Abstand der beiden Pole (2) eines Polpaares (P1-P4) beträgt bei einer Gleichverteilung über den Rotorumfang konstant 45°. Dies bewirkt ein Auslöschen der 12. Harmonischen des Rastmomentes. Der Abstand aller Polpaare (P1-P4) ist wegen der Gleichverteilung der Pole (2) zunächst ebenfalls konstant. Das Polpaar P1 soll nun als Bezugspolpaar ausgewählt und in seiner Position auf dem Rotor nicht mehr verändert werden. Gleiches gilt für das gegenüberliegende Polpaar P3. Gemäß der Berechnung der dominanten Harmonischen des Rastmomentes aus 6 x p (6 x Anzahl der Polpaare) ergibt sich somit die 24. Harmonische als dominante Harmonische für die gewählte Anordnung. Das gezeigte Polpaar P2 ist gemäß der Formel $\alpha_{\nu,p} = \frac{\nu-1}{p}; \nu=1\ldots p$ um $+\frac{1}{4}$ der Wellenlänge der 24. Harmonischen verschoben, d.h. der Winkelabstand der Polpaare P1 und P2 ist um 3,75° reduziert. Am Rotor entspricht das einer Verschiebung von P2 im Uhrzeigersinn. Das Polpaar P4 ist um -¼ der Wellenlänge der 24. Harmonischen verschoben, womit sich der Winkelabstand von Polpaar P1 und P4 um ebenfalls 3,75° reduziert ist, was einer Verschiebung gegen den Uhrzeigersinn am Rotor gleichzusetzen ist.

Figur 2 stellt die Auswirkung der in Figur 1 gezeigten Polpaarverschiebung im Einheitskreis dar. Die Verschiebung der Phase des Vektors V2 um $\alpha_{\nu,p} = \frac{2-1}{4} = +1/4$ der Wellenlänge bedeutet ein Voreilen dieses Vektors gegenüber Vektor V1 um + 45 °. Die Verschiebung des Vektors V4 um $\alpha_{\nu,p} = \frac{3-1}{4} = +3/4$ bzw. vereinfacht um - ¼ der Wellenlänge bedeutet ein Nacheilen des Vektors V4 gegenüber Vektor V1 um 45°. Die Phase von Vektor V3 bleibt unverändert gegenüber der des Vektors V1.

Die Überlagerung aller Vektoren (V1-V4) ist in Figur 3 dargestellt. Eine mathematisch positive Drehung entspricht im Einheitskreis einer Drehung gegen den Urzeigersinn und mechanisch am Rotor in diesem konkreten Beispiel einer Drehung im Uhrzeigersinn. Eine mathematisch negative Drehung entspricht dagegen im Einheitskreis einer Drehung im Uhrzeigersinn und mechanisch am Rotor einer Drehung gegen den Uhrzeigersinn. Es sind aus Gründen der Übersichtlichkeit in den schematischen Figuren 1 bis 3 nur die zum Verständnis erforderlichen Details aufgezeigt. Es wird deutlich, dass sich die Vektoren 2 und 4 auslöschen, da sie gegenphasig zueinander im Einheitskreis liegen. Die Vektoren 1 und 3 dagegen addieren sich auf, denn sie sind gleichphasig zueinander. Die Summe der beiden Vektoren $V_{res}$ ergibt das resultierende Rastmoment für die gewählte Anordnung. Es ist gegenüber einer Rotorkonstruktion ohne Polpaarverschiebung um 50 % reduziert.

Die höheren Harmonischen der induzierten Spannung erfahren neben dem Rastmoment zusätzlich eine Dämpfung, was die Drehmomentwelligkeit reduziert.

Figur 4 zeigt, wie die Polpaare (P1-P12) entlang der Strecke s zu verteilen sind, um die erfindungsgemäße Lösung zu realisieren. Ein Polpaar (P1-P12) ist jeweils mit P + laufende Nummer gekennzeichnet. Die unterschiedlichen Farben der Pole (8,9) kennzeichnen die unterschiedliche Polarität der Pole (8,9) eines Polpaares (P1-P12). Es könnte sich hier um die Komponente (10) eines Linearmotors oder um die lineare Darstellung des Rotorumfangs (10) einer rotationssymmetrischen Maschine handeln, die parallel zur Rotorachse aufgeschnitten wurde (Schnittlinie A-A'). In beiden Fällen werden Permanentmagnete (8,9) zur Erzeugung des Erregerfeldes verwendet. In dem gezeigten Beispiel stehen 24 Pole (8,9) zur Verfügung. Bei Gleichverteilung entlang der Strecke s stellt sich eine identische Pollücke (6, s/24) für alle Pole (8,9) ein. 12 Pole (8,9) sind als Nordpol und 12 als Südpol ausgelegt. Jeweils zwei nebeneinanderliegende Pole (8,9) unterschiedlicher Polarität bilden die Polpaare P1 bis P12. Auch die Polpaarlücken (5) liegen damit zunächst konstant bei s/24. Jeweils 3 Polpaare (P1-P3, P4-P6, P7-P9, P10-P12) bilden die Gruppen G1 bis G4 mit einer Breite von s/4 je Gruppe. Die Pollücken (6) der Polpaare (P1-P12) innerhalb der Gruppen (G1-G4) sind reduziert dargestellt und wurden so optimiert, dass sich der erfindungsgemäße Effekt einstellt. Das Prinzip dieser Anordnung ist auf eine beliebige Anzahl von Polpaaren (P1-P12) anwendbar. Bedingung ist jedoch, dass jedes Polpaar (P1-P12) einer Gruppe (G1-G4) angehört und alle Gruppen (G1-G4) eine einheitliche Anzahl von Polpaaren (P1-P12), mindestens aber zwei Polpaare, enthalten. Die Anzahl der Polpaare (P1-P12) muss daher stets durch die Anzahl der Gruppen (G1-G4) ohne Rest teilbar sein.

Figur 5 zeigt grob schematisch, dass die felderzeugenden Pole der Magnetisierungsvorrichtung (11) korrespondierend zu den Magnetrohlingen des Sekundärteiles (10) angeordnet werden, um diese abwechselnd im Sinne der Erfindung zu magnetisieren. Wesentlich bei dieser Darstellung ist, dass die Lücken zwischen den Magnetisierungspolen identisch mit den Pol- (6) und Polpaarlücken (5) des Sekundärteiles sind. Die eingezeichneten Pfeile deuten das magnetische Feld (12) an. Durch die Ausführung der felderzeugenden Einheiten sind unterschiedlichste Magnetisierungsprinzipien denkbar. Im Beispiel wird eine parallele Magnetisierung gezeigt.

Figur 6 zeigt die Ausführung der Urwicklung bestehend aus 2 Spulen (Zahn 1+4; 7+10 und 13+16) für einen Strang schematisch bei einer Nutzahl N=18, wobei die Verschaltung der einzelnen Urwicklungen hier noch offen ist. Die freien Zähne können von zwei weiteren Strängen belegt und im Sinne von Strang 1 bewickelt werden. Die Zähne sind mit den Nummern 1 bis 18 gekennzeichnet.

Bezugszeichenliste

| | |
|---|---|
| Px | Polpaar Nr. x, x = 1-4 bzw. |
| V1 - V4 | Vektor 1 bis 4 der 24. dominanten Harmonischen des Rastmomentes |
| V5 | Resultierender Vektor nach Addition von V1 bis V4 |
| 1 | Rotorquerschnitt |
| 2 | Polquerschnitt |
| 3,4 | Verschiebungswinkel der Poolpaare P2 und P4 aus ihrer Ruhelage |
| 5 | Polpaarlücke |
| 6 | Pollücke |
| 7 | Mittelachse eines Polpaares, hier P3 |
| 8 | Pol mit Polarität 1 |
| 9 | Pol mit Polarität 2 |
| 10 | Sekundärteil |
| 11 | Schnitt durch eine Magnetisierungsvorrichtung (grob schematisch) |
| 12 | Feldorientierung |

s         Strecke, auf der die Pole gleichverteilt sind

s/4      Strecke, die eine Gruppe einnimmt

**Patentansprüche**

1. Drehstrommaschine mit folgenden Merkmalen:

    - Primärteil, mit N Nuten und m elektrischen Strängen;
    - Sekundärteil (10) mit einer Anzahl von Polpaaren (P1-P12), bestehend aus je zwei magnetischen Polen (8,9) unterschiedlicher Polarität;

**dadurch gekennzeichnet, dass**

    6.1 die Pollücke (6) aller Polpaare (P1-P12) im wesentlichen gleich ist und sich aus einer Gleichverteilung aller magnetischen Pole (8,9) auf dem Sekundärteil (10) ergibt;
    6.2 unmittelbar aufeinanderfolgende Polpaare (P10-P12) Gruppen (G4) bilden, wobei
    6.2.1 die Anzahl der Polpaare (P1-P12) innerhalb jeder Gruppe (G1-G4) identisch ist,
    6.2.2 eine Gruppe (G4) wenigstens zwei Polpaare enthält (P10-P11),
    6.2.3 wenigstens zwei Gruppen (G3, G4) existieren,
    6.2.4 jedes vorhandene Polpaar (P1-P12) einer Polpaargruppe (G1-G4) zugehörig ist,
    6.2.5 die Gruppen (G1-G4) äquidistant entlang des Sekundärteiles (10) verteilt sind,
    6.2.6 alle Polpaare (P1-P12) einer Gruppe (G1-G4) um einen vorbestimmten, für alle Gruppen (G1-G4) einheitlichen, Abstand (5) und Richtungssinn gegenüber einer äquidistanten Verteilung aller vorhandenen Polpaare (P1-P12) auf dem Sekundärteil (10) zueinander relativ verschoben sind, so dass die Polpaarlücke (5) innerhalb jeder Gruppe im wesentlichen gleich ist.

2. Drehstrommaschine nach Anspruch 1, **dadurch gekennzeichnet, dass** bei einer Maschine mit N=18 Nuten und p=6 Polpaaren (P1-P12) jeweils zwei Polpaare (P10-P11) eine Gruppe (G4) bilden.

3. Drehstrommaschine nach Anspruch 2, **dadurch gekennzeichnet, dass** der Abstand der Polpaare (5) innerhalb einer Gruppe (G1-G4) etwa 3/10 der Nutteilung (Zahnbreite + Nutbreite) beträgt.

4. Drehstrommaschine nach Anspruch 2, **dadurch gekennzeichnet, dass** der Abstand der Polpaare (5) innerhalb einer Gruppe (G1-G4) etwa 1/4 der Nutteilung beträgt.

5. Drehstrommaschine nach Anspruch 1, **dadurch gekennzeichnet, dass** bei einer Maschine mit N=18 Nuten und p=6 Polpaaren (P1-P12) jeweils drei Polpaare (P10-P12) eine Gruppe (G4) bilden.

6. Drehstrommaschine nach Anspruch 5, **dadurch gekennzeichnet, dass** der Abstand der Polpaare (5) innerhalb einer Gruppe (G1-G4) etwa 1/5 der Nutteilung beträgt.

7. Drehstrommaschine nach Anspruch 5, **dadurch gekennzeichnet, dass** der Abstand der Polpaare (P1-P12) innerhalb einer Gruppe (G1-G4) etwa 1/6 der Nutteilung beträgt.

8. Drehstrommaschine nach Anspruch 1 bis 7, **dadurch gekennzeichnet, dass** die magnetischen Pole (8,9) des Sekundärteiles (10) durch Permanentmagnete realisiert sind.

9. Drehstrommaschine nach Anspruch 8, **dadurch gekennzeichnet, dass** ein einziger Pol (8,9) eines Polpaares (P1-P12) aus mindestens zwei kleinen Einzelmagneten aufgebaut ist.

10. Drehstrommaschine **dadurch gekennzeichnet, dass** die Pole (8,9) durch ein auf dem Sekundärteil (10) aufgebrachtes, abschnittsweise im Sinne der Ansprüche 1 bis 7 permanent magnetisiertes, Material realisiert sind.

11. Drehstrommaschine nach Anspruch 1 bis 10, **dadurch gekennzeichnet, dass** die Pole (8,9) und/oder die Nuten zur Aufnahme der Drehstromwicklung geschrägt zur Motorachse angeordnet sind.

12. Drehstrommaschine nach Anspruch 1 bis 11, **dadurch gekennzeichnet, dass** es sich um eine konzentrierte Wicklung handelt.

**13.** Drehstrommaschine nach Anspruch 1 bis 12, **dadurch gekennzeichnet, dass** es sich um einen Generator handelt.

**14.** Drehstrommaschine nach Anspruch 1 bis 12, **dadurch gekennzeichnet, dass** es sich um einen Motor handelt.

**15.** Verwendung des Motors nach Anspruch 14 in einer Maschine für Werkzeug- und Formenbau, in Druckmaschinen und generell bei Antrieben für die Automatisierungstechnik.

**16.** Magnetisierungswerkzeug mit Magnetisierungsköpfen zur Herstellung eines Sekundärteiles (10) gemäß Anspruch 8 bis 9 **dadurch gekennzeichnet, dass** die Magnetisierungseinheiten (11) korrespondierend zu den am Sekundärteil (10) angebrachten Polen (8,9) angeordnet sind.

**17.** Montagewerkzeug zur Anbringung der magnetischen Pole (8,9) am Sekundärteil (10) gemäß Anspruch 8 bis 10 **dadurch gekennzeichnet, dass** die Bestückungsvorrichtung korrespondierend zur Geometrie des Sekundärteiles (10) aufgebaut ist.

Figur 1

**Figur 2 (Einheitskreis)**

V2      V4

V1            V3

Vres = 50% Vmax

Figur 3 (Vektoraddition, Vmax=V1+V2+V3+V4)

10

Polpaarlücke (5) nach Verschiebung
(reduziert)

Pollücke (6) bei Gleichverteilung (s/24 )

8    9

s / 4

A ——————————————————————————————————————————————— A'

P1    P2    P3      P4    P5    P6      P7    P8    P9      P10    P11    P12

G1              G2                  G 3                  G 4

s

**Figur 4**

**Figur 5**

(Prinzipielle Darstellung der korrespondierenden Magnetisierungseinrichtung)

EP 1 737 107 A2

Figur 6 (Drei Zweige eines Stranges zur Realisierung einer Phase bei 18 Zähnen)

EP 1 737 107 A2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4133723 A1
- EP 1130747 A2

**In der Beschreibung aufgeführte Nicht-Patentliteratur**

- **BIANCHI, N. ; BOLOGNANI, S.** Reducing torque ripple in PM synchronous motors by pole shifting. *Proc. ICEM 2000,* 2000, 1221-1226
- **W. CAI ; D. FULTON ; K. REICHERT.** Design of permanent magnet motors with low torque ripples: a review. *Proc. ICEM 2000,* 2000, 1384-1385
- **JAIME DE LA REE ; NADY BOULES.** Magnet Shaping To Reduce Induced Voltage Harmonics In PMMachines With Surface Mounted Magnets. *IEEE Transactions on Energy Conversion,* Marz 1991, vol. 6 (1
- Induced Voltage Harmonics Reduction of PM Cylindrical Machines. *IEEE Transactions of Industrial Applications on Industry Applications,* Mai 1992, vol. 28 (3